# EUROPÄISCHE PATENTSCHRIFT

(11) **EP 2 083 176 B1**
(45) Veröffentlichungstag und Bekanntmachung des Hinweises auf die Patenterteilung: **20.10.2010**
(21) Anmeldenummer: 08021713.6
(22) Anmeldetag: 15.12.2008
(51) Int. Cl.: F04D 29/66

(54) **Lüftereinheit mit einem Axiallüfter**
Ventilation unit with an axial ventilator
Unité de ventilateur dotée d'un ventilateur axial

(30) Priorität: 25.01.2008 DE 202008001613 U
(43) Veröffentlichungstag der Anmeldung: 29.07.2009
(73) Patentinhaber: ebm-papst St. Georgen GmbH & Co. KG, 78112 St. Georgen (DE)
(72) Erfinder: Winkler, Wolfgang Arno, 78112 St. Georgen (DE)
(74) Vertreter: Raible, Tobias

(56) Entgegenhaltungen:
- WO-A-93/04289
- DE-U1-202005 011 514
- US-A- 4 568 243
- US-A- 4 908 929

## Beschreibung

Die Erfindung betrifft eine Lüftereinheit mit einem Axiallüfter.

Axiallüfter, und Lüfter im Allgemeinen, weisen üblicherweise eine herstellungsbedingte Unwucht auf, welche in deren Betrieb zu unerwünschten Vibrationen führen kann. Auch können durch Motor- und Luftströmungsgeräusche der Lüfter im Betrieb störende Geräusche entstehen. Derartige Vibrationen und störende Geräusche müssen besonders in Komfortanwendungen gedämpft werden.

Die DE 20 2005 011 514 U1 betrifft verschiedene Ausführungen von Lüftereinheiten. Bei einer Ausführung befindet sich der Lüfter in einem ringförmigen Gehäuseteil, und dieses ist über sechs Gummischnüre mit einem externen Befestigungsflansch verbunden.

Bei einer anderen Ausführungsform ist statt der Gummischnüre ein konisches Teil aus Polyurethan vorgesehen, wodurch die Luftverluste verringert werden und der Wirkungsgrad verbessert wird.

Aus der US 4 568 243 ist eine Lüftereinheit bekannt, welche ein äußeres und ein inneres Rahmenelement verwendet, welche durch eine Gummimembran miteinander verbunden sind. Der Axiallüfter ist am inneren Rahmenelement befestigt. Die Gummimembran soll die Übertragung von Körperschall auf das äußere Rahmenelement verhindern oder reduzieren.

Die US 4 908 929 verwendet einen Lüfter, der durch eine Moosgummischeibe mit einem Gehäuse verbunden ist, wodurch eine Geräuschdämpfung erreicht werden soll. Jedoch ist die Geräuschdämpfung bei einer solchen Konstruktion für die meisten Anwendungsfälle zu schwach.

Es ist deshalb eine Aufgabe der Erfindung, eine neue Lüftereinheit mit einem Axiallüfter bereit zu stellen. Diese Aufgabe wird gelöst durch eine Lüftereinheit gemäß Anspruch 1. Hierbei erreicht man einen sehr kompakten Aufbau bei verbesserter Vibrations- und Geräuschdämpfung.

Bevorzugte Weiterbildungen sind Gegenstand von Unteransprüchen.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen. Es zeigt:
- Fig. 1: eine perspektivische Ansicht der Rückseite einer Lüftereinheit mit Axiallüfter gemäß einer ersten Ausführungsform,
- Fig. 2: eine perspektivische Ansicht der Vorderseite der Lüftereinheit von Fig. 1,
- Fig. 3: eine teilweise geschnittene Explosionsdarstellung der Lüftereinheit von Fig. 1,
- Fig. 4: eine teilweise geschnittene, perspektivische Ansicht der Lüftereinheit von Fig. 1,
- Fig. 5: eine Schnittansicht der Lüftereinheit von Fig. 1,
- Fig. 6: eine Schnittansicht des mit einem Trägerring 40 verbundenen Faltenbalgs von Fig. 1,
- Fig. 7: eine Schnittansicht des Faltenbalgs von Fig. 1,
- Fig. 8: eine perspektivische Ansicht des Stützrings 60 von Fig. 1,
- Fig. 9: eine perspektivische Ansicht des Trägerrings 40 von Fig. 1,
- Fig. 10: eine Schnittansicht einer alternativen Ausführungsform des Faltenbalgs von Fig. 7,
- Fig. 11: eine perspektivische Ansicht einer Rückseite einer Lüftereinheit mit Axiallüfter gemäß einer zweiten Ausführungsform,
- Fig. 12: eine perspektivische Ansicht der Vorderseite der Lüftereinheit von Fig. 11,
- Fig. 13: eine teilweise geschnittene Explosionsdarstellung der Lüftereinheit von Fig. 11,
- Fig. 14: eine Schnittansicht der Lüftereinheit von Fig. 11,
- Fig. 15: eine teilweise geschnittene, perspektivische Ansicht der Lüftereinheit von Fig. 11,
- Fig. 16: eine teilweise geschnittene, perspektivische Ansicht des mit dem Trägerring verbundenen Faltenbalgs von Fig. 11,
- Fig. 17: eine Schnittansicht des Faltenbalgs von Fig. 11,
- Fig. 18: eine perspektivische Ansicht des Stützrings 60 von Fig. 11, und
- Fig. 19: eine perspektivische Ansicht des Trägerrings 140 von Fig. 11.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

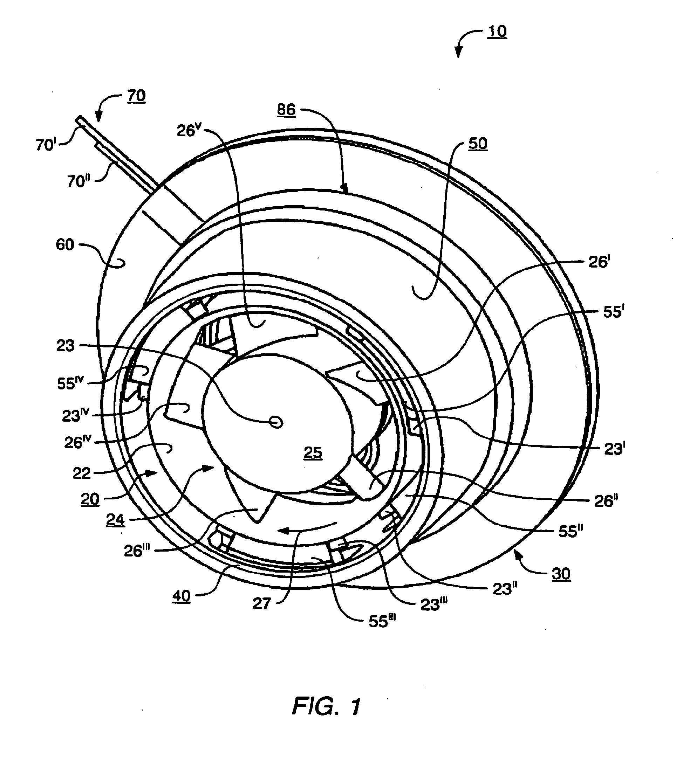

Fig. 1 zeigt eine erste Ausführungsform einer Lüftereinheit 10 mit einem Axiallüfter 20 und einer vibrations- und geräuschdämpfenden Vorrichtung 30 in einer Rückansicht. Der Axiallüfter 20 hat ein etwa hohl zylindrisches Luftführungsrohr 22, welches einheitlich aus Kunststoff oder Metall oder einer beliebigen Mischform hiervon ausgebildet werden kann. Am Außenumfang des Luftführungsrohrs 22 sind mehrere Aufhängeglieder 23 aus einem elastomeren Werkstoff vorgesehen, von denen in Fig. 1 die Aufhängeglieder 23' bis 23^{IV} sichtbar sind. Im inneren des Luftführungsrohrs 22 ist ein Lüfterrad 24 angeordnet, welches um eine Drehachse 23 drehbar angeordnet ist, die entlang der Längsachse des Luftführungsrohrs 22 verläuft. Das Lüfterrad 24 hat Lüfterflügel 26' bis 26^{V}, deren Form an die Form der Innenseite des Luftführungsrohres 22 angepasst ist.

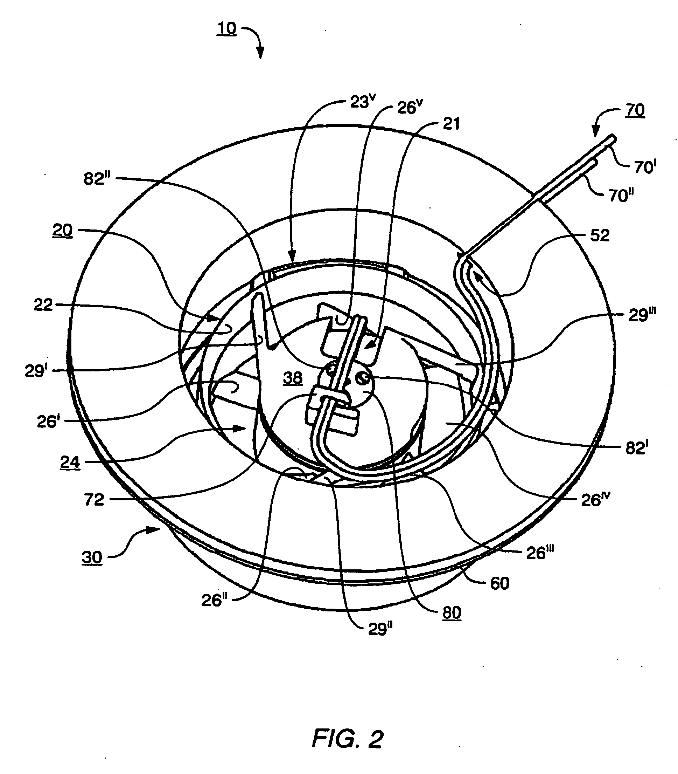

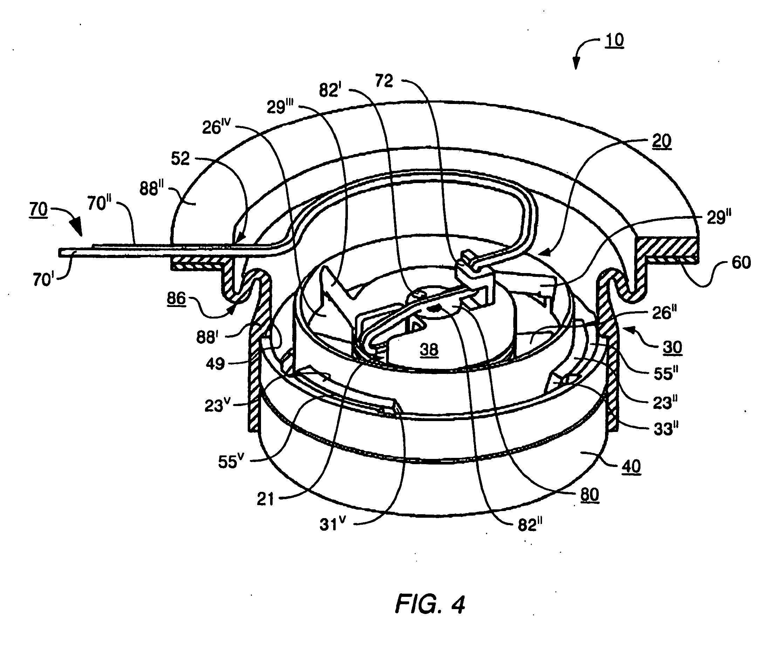

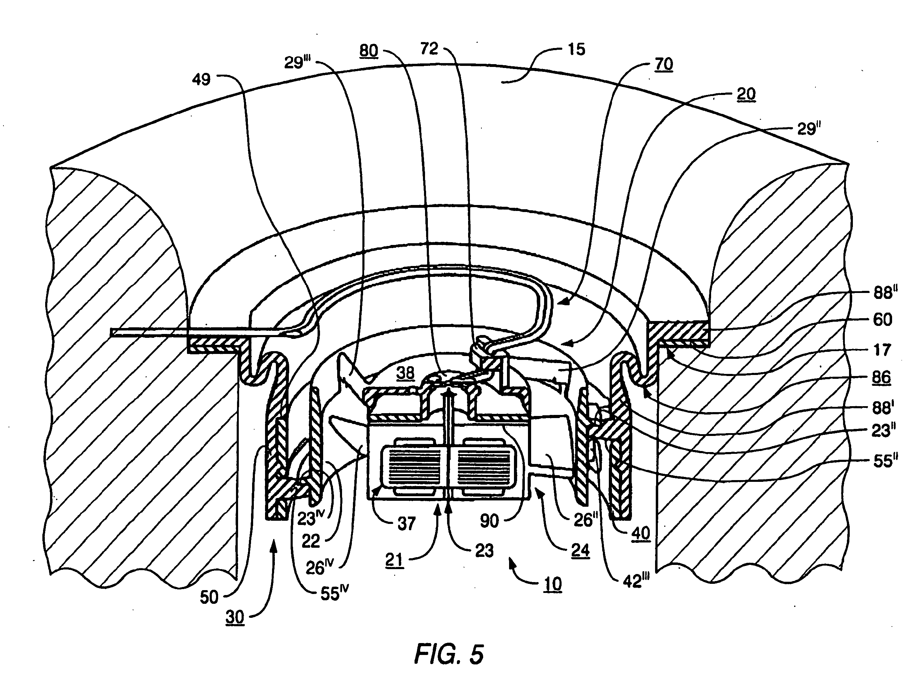

Der Lüfter 20 hat einen Motor 21 (Fig. 4 und 5) zum Antrieb seines Lüfterrades 24, welcher Motor 21 bevorzugt als elektronisch kommutierter Außenläufermotor ausgebildet ist. Er hat eine Rotorglocke 25 (Fig. 1), an der das Lüfterrad 24 befestigt ist. Zur Montage des Motors 21 in dem Luftführungsrohr 22 dient ein Befestigungsflansch 38 (Fig. 2), der über dünne Haltestege 29' bis 29^{III} (Fig. 2) mit dem Luftführungsrohr 22 verbunden ist, wie bei Fig. 2 beschrieben.

Der Motor 21 ist mit einer flexiblen elektrischen Anschlussleitung 70 verbunden. Diese ist an einer Leiterplatte 90 (Fig. 5) des Motors 21 angelötet. Der Lüfter 20 hat zwei Leitungen 70' und 70" zum Zuführen einer Betriebsspannung. Vielfach sind weitere Leitungen vorgesehen, z.B. für ein Tachosignal oder ein Alarmsignal.

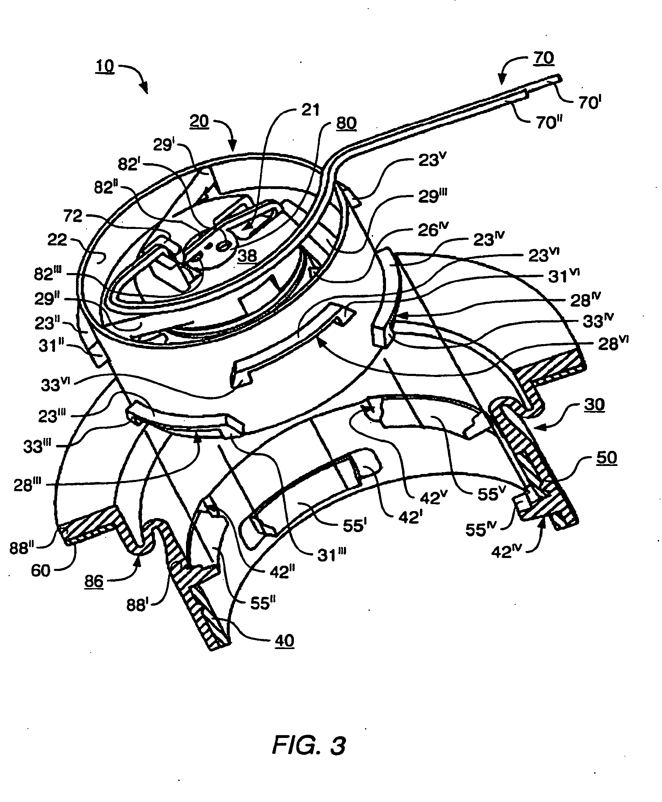

Wie aus Fig. 1 ersichtlich, ist der Ventilator 20 in der vibrations- und geräuschdämpfenden Vorrichtung 30 angeordnet. Diese hat einen ersten Ring 40 zur elastischen Aufhängung des Lüfters 20, einen mit diesem verbundenen rohrartigen Fortsatz 50 zur Schwingungsdämpfung, sowie einen zweiten Ring 60 zur Verbindung der Lüftereinheit 10 mit einem Trägerteil 15 (Fig. 5). Der erste Ring 40 trägt somit den Lüfter 20 und wird deshalb im Folgenden auch als "Trägerring" bezeichnet. An dem zweiten Ring 60 stützt sich der Fortsatz 50 relativ zu dem Trägerteil ab. Deshalb wird dieser Ring 60 auch als "Stützring" bezeichnet. Der rohrartige Fortsatz 50 ist als Faltenbalg ausgebildet und hat ein Federelement 86 mit einem vorgegebenen Schwingverhalten zur Vibrations- und Geräuschdämpfung, welches bei Fig. 3 im Detail beschrieben ist.

Gemäß einer bevorzugten Ausführungsform sind der Trägerring 40, der rohrartige Fortsatz 50 und der Stützring 60 als bauliche Einheit in Mehrkomponententechnik ausgebildet, insbesondere in 2K-Technik (2K = 2 Kunststoffe). Hierbei sind der Trägerring 40 und der Stützring 60 bevorzugt aus einem harten Kunststoff und der rohrartige Fortsatz 50 aus einem weichen Werkstoff ausgebildet. Der rohrartige Fortsatz 50 kann beispielsweise durch Spritzguss, eine Klemmverbindung, eine Klebeverbindung oder Kunststoffschweißen mit dem Trägerring 40 und/oder dem Stützring 60 verbunden werden.

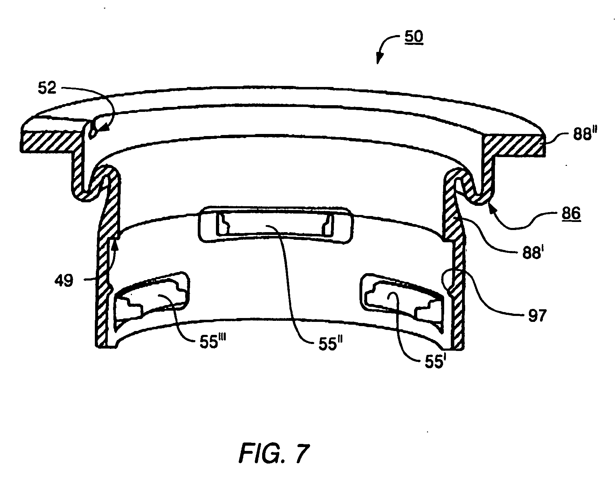

Am Trägerring 40 sind zum Einhängen der Aufhängeglieder 23 mehrere Einhängeglieder 55 aus einem harten Kunststoff vorgesehen, von denen in Fig. 1 die Einhängeglieder 55' bis 55^{IV} sichtbar sind. Die Einhängeglieder 55 können zumindest teilweise auch am Innenumfang des rohrartigen Fortsatzes 50 aus einem weichen Kunststoff ausgebildet sein, wie bei Fig. 3 und 7 beschrieben.

Im Betrieb des Axiallüfters 20 treibt der Motor 21 das Lüfterrad 24 derart an, dass dieses sich zur Erzeugung eines Luftstroms um seine Drehachse 23 dreht, beispielsweise in Richtung eines Pfeils 27 (Fig. 1). Hierbei werden die z.B. durch eine Unwucht des Lüfters 20 entstehenden, unerwünschten Vibrationen und Geräusche von der Vorrichtung 30 gedämpft, wie bei Fig. 5 beschrieben.

Fig. 2 zeigt eine Vorderansicht der Lüftereinheit 10 von Fig. 1, in der ein weiteres Aufhängeglied 23^{V} gezeigt wird, und die Montage des dem Lüfter 20 zum Antrieb des Lüfterrads 24 zugeordneten Motors 21 an einer am Luftführungsrohr 22 befestigten Flanschplatte 38 verdeutlicht ist, die über dünne Haltestege 29' bis 29^{III} mit dem Luftführungsrohr 22 verbunden ist. Am Flansch 38 ist ein Lagerelement 80 angeordnet, z.B. ein Lagerrohr, auf dem der Rotor des Motors 21 gelagert ist. Das Element 80 ist mit drei Schrauben 82, von denen in Fig. 2 nur die Schrauben 82' und 82" sichtbar sind, am Flansch 38 befestigt.

Fig. 2 zeigt auch die Kabelführung der Anschlussleitung 70. Diese wird vom Motor 21 über den Flansch 38, wo diese an einer Halterung 72 befestigt ist, zur Innenwand des rohrartigen Fortsatzes 50, dort entlang zu einer Öffnung 52 und durch diese hindurch in radialer Richtung auswärts geführt.

Fig. 3 zeigt eine Ausführungsform, bei der die Einhängeglieder 55 aus einem weichen Kunststoff als integraler Bestandteil des rohrartigen Fortsatzes 50 ausgebildet sind, welcher den Trägerring 40 zumindest teilweise ummantelt. Der Trägerring 40 hat Ausnehmungen 42, von denen in Fig. 3 nur die Ausnehmungen 42', 42", 42^{IV} und 42^{V} sichtbar sind, durch welche sich die Einhängeglieder 55 erstrecken.

In Fig. 3 sind die Einhängeglieder 55 als Auflageelemente ausgebildet, auf denen die Aufhängeglieder 23 nach der Montage der Lüftereinheit 10 aufliegen. Hierbei sind die Ausnehmungen 42 bevorzugt derart ausgebildet, dass die Aufhängeglieder 23 zumindest teilweise in diese eingreifen, um ein Verklemmen bzw. Einhaken in den Ausnehmungen 42 und somit eine stabile Auflage auf den zugeordneten Auflageelementen zu gewährleisten.

Die als Auflageelemente ausgebildeten Einhängeglieder 55 sind mit nutenförmigen Aussparungen 28 und verstärkten Seitenbereichen 31 bzw. 33 ausgebildet. Z.B. hat das Auflageelement 23^{VI} eine nutenförmige Aussparung 28^{VI} und verstärkte Seitenbereiche 31^{VI} und 33^{VI}.

Wie aus Fig. 3 ersichtlich, hat das Lagerelement 80 ein weiteres Befestigungselement 82''' und das Federelement 86 ist zwischen einem hohl zylindrischen Abschnitt 88' und einem Kragen 88" des rohrartigen Fortsatzes 50 angeordnet. Der Abschnitt 88' ist mit dem Trägerring 40 und der Kragen 88" mit dem Stützring 60 verbunden. Das Federelement 86 hat ein vorgegebenes Schwingverhalten, um zur Vibrations- und Geräuschdämpfung eine relative Bewegung zwischen dem Trägerring 40 und dem Stützring 60 zu ermöglichen, und ist gemäß einer ersten Ausführungsform als gebogene, in etwa S-förmige Schwingungsmembran ausgebildet.

Fig. 4 zeigt eine teilweise geschnittene, perspektivische Ansicht der Lüftereinheit 10. Fig. 4 verdeutlicht einerseits die auf den Einhängegliedern 55 aufliegenden Aufhängeglieder 23, und andererseits eine ringförmige Schulter 49, gegen die der Trägerring 40 anliegt.

Fig. 5 zeigt die in einem Trägerteil 15 angeordnete Lüftereinheit 10. Das Trägerteil 15 ist z.B. aus Schaumstoff ausgebildet, welcher zur Polsterung eines Fahrzeugsitzes verwendet wird. Hierbei kann die Lüftereinheit 10 zur Belüftung bzw. Heizung des Sitzes dienen, wobei diese wie gezeigt in dem Trägerteil 15 versenkt ist, um einen vorgegebenen Abstand zwischen dem Kragen 88" und einer entsprechenden Sitzoberfläche zu gewährleisten.

Darüber hinaus zeigt Fig. 5 den Motor 21 mit einer Statoranordnung 37 und einer Leiterplatte 90, an welcher die Anschlussleitung 70 angeschlossen ist. Der Motor 21 kann mit einem beliebigen, elektronisch kommutierten Elektromotor realisiert werden, der zum Antrieb des Axiallüfters 20 geeignet ist, so dass auf eine eingehende Beschreibung des Motors 21 verzichtet werden kann.

Insbesondere verdeutlicht Fig. 5 die Aufhängung des Luftführungsrohrs 22 in der vibrations- und geräuschdämpfenden Vorrichtung 30 durch die auf den Einhängegliedern 55 aufliegenden Aufhängeglieder 23, wobei nur die auf den Einhängegliedern 55" und 55^{IV} aufliegenden Aufhängeglieder 23" bzw. 23^{IV} sichtbar sind. Diese wirken derart zusammen, dass Schwingungen des Lüfters 20 durch relative Bewegungen des Federelements 86 zwischen dem Trägerring 40 und dem Stützring 60 kompensiert werden, um somit eine effiziente Vibrations- und Geräuschdämpfung für die Lüftereinheit 10 zu bewirken. Hierzu hat die Vorrichtung 30 sowohl in horizontaler, als auch in vertikaler Richtung eine vorgegebene Anzahl von Freiheitsgraden.

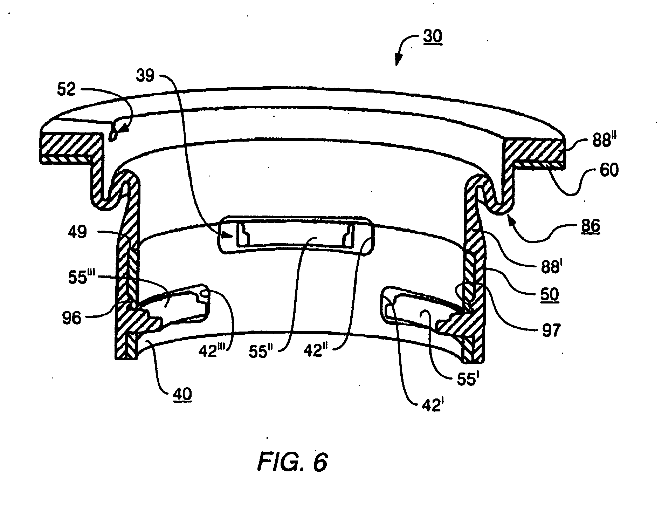

Fig. 6 zeigt eine Schnittansicht der vibrations- und geräuschdämpfenden Vorrichtung 30 gemäß einer Ausführungsform. Fig. 6 verdeutlicht die an dem rohrartigen Fortsatz 50 vorgesehenen Einhängeglieder 55' bis 55"', welche durch die im Trägerring 40 vorgesehenen Ausnehmungen 42' bis 42''' durchgreifen. Auch zeigt Fig. 6 einen an dem Fortsatz 50 vorgesehenen, ringförmigen Vorsprung 97, welcher in eine am Trägerring 40 vorgesehene, ringförmige Nut 96 eingreift, um eine rutschfeste Verbindung zwischen dem Trägerring 40 und dem Fortsatz 50 zu gewährleisten.

Fig. 7 zeigt eine Schnittansicht des rohrartigen Fortsatzes 50, welche die an diesem vorgesehenen Einhängeglieder 55' bis 55''', den ringförmigen Vorsprung 97 und die ringförmige Schulter 49 verdeutlicht.

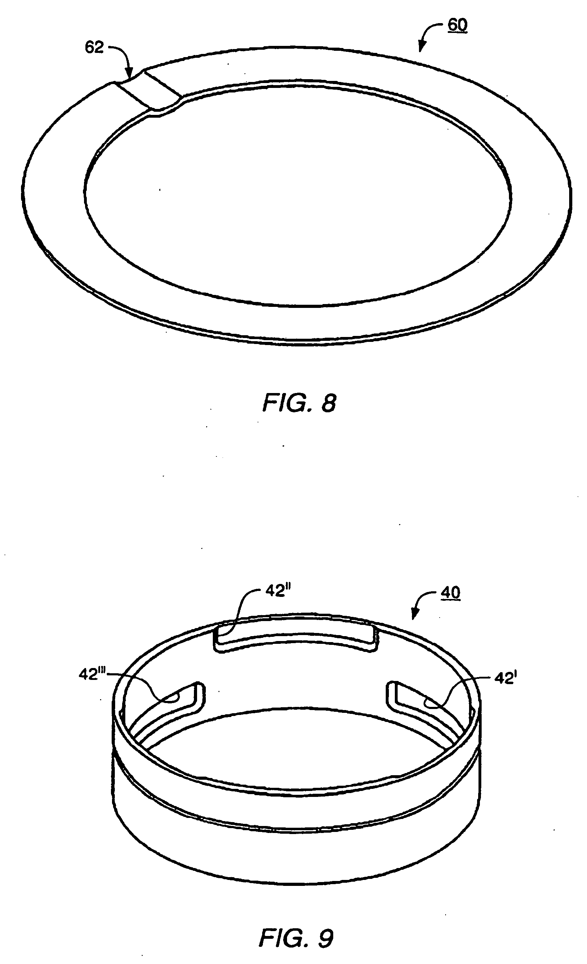

Fig. 8 zeigt eine perspektivische Ansicht des Stützrings 60, welcher eine Ausbuchtung 62 zur Führung der Anschlussleitung 70 von Fig. 1 aufweist, und Fig. 9 zeigt eine perspektivische Ansicht des Trägerrings 40, welche die in diesem vorgesehenen Ausnehmungen 42' bis 42''' verdeutlicht.

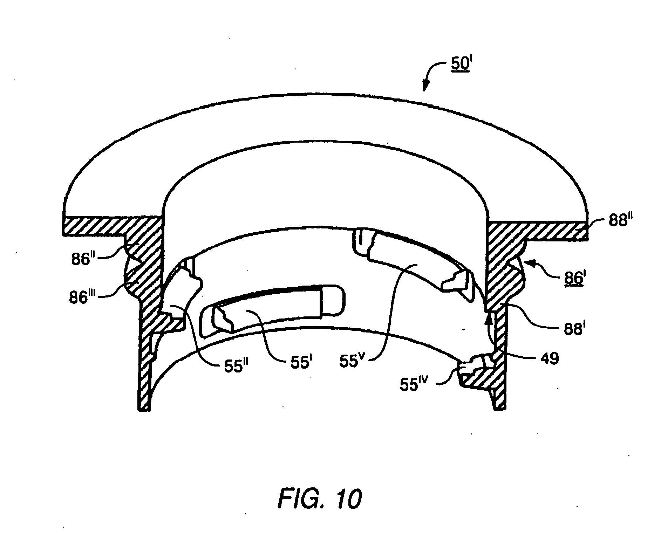

Fig. 10 zeigt einen rohrartigen Fortsatz 50' gemäß einer zweiten Ausführungsform, welcher anstelle des oben beschriebenen Fortsatzes 50 mit der vibrations- und geräuschdämpfenden Vorrichtung 30 verwendbar ist. Im Gegensatz zum Fortsatz 50 weist der rohrartige Fortsatz 50' ein modifiziertes Federelement 86' mit einer den Kragen 88" mit dem zylinderförmigen Abschnitt 88' verbindenden ersten Umfangswulst 86" und einer im - in Fig. 10 - oberen Bereich des Abschnitts 88' vorgesehenen zweiten Umfangswulst 86''' auf. Durch die Umfangswülste 86" und 86''' weist der Fortsatz 50' ein anderes Schwingverhalten auf, als der oben beschriebene Fortsatz 50 mit der Schwingungsmembran. D.h., das Federelement 86 bzw. 86' kann auf unterschiedliche Art und Weise ausgestaltet werden, je nachdem, welches Schwingverhalten erforderlich ist. Dementsprechend sind viele mögliche Ausgestaltungen des Federelements 86 bzw. 86' als Teil der Erfindung zu verstehen.

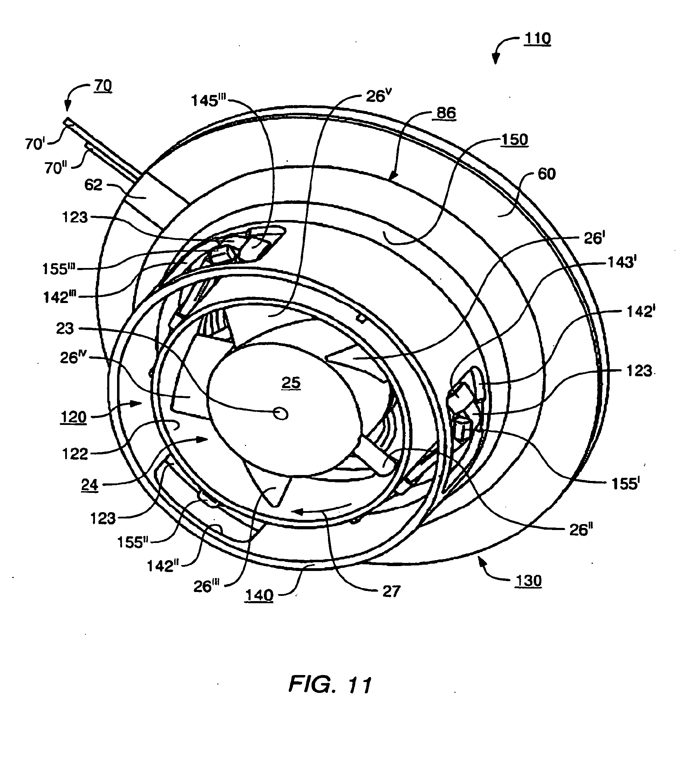

Die Fig.11 bis 19 zeigen eine andere Ausführungsform einer Lüftereinheit 110. Bei dieser werden Bauteile, deren Funktionalität der Funktionalität von Bauteilen der bei den Fig. 1 bis 10 beschriebenen Lüftereinheit 10 entspricht, mit den um die Zahl 100 vergrößerten Bezugszeichen der Bauteile der Lüftereinheit 10 versehen. Dementsprechend wird die Beschreibung derartiger Bauteile im Folgenden nicht in allen Einzelheiten wiederholt.

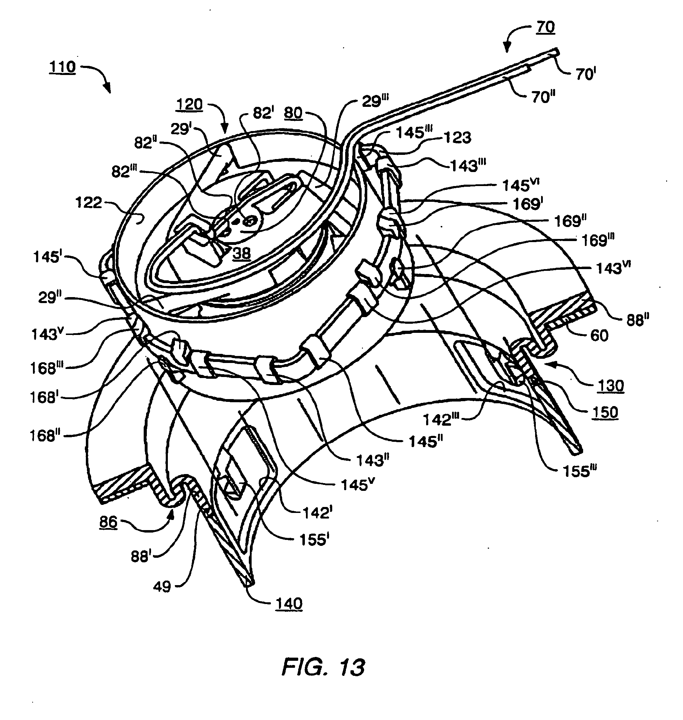

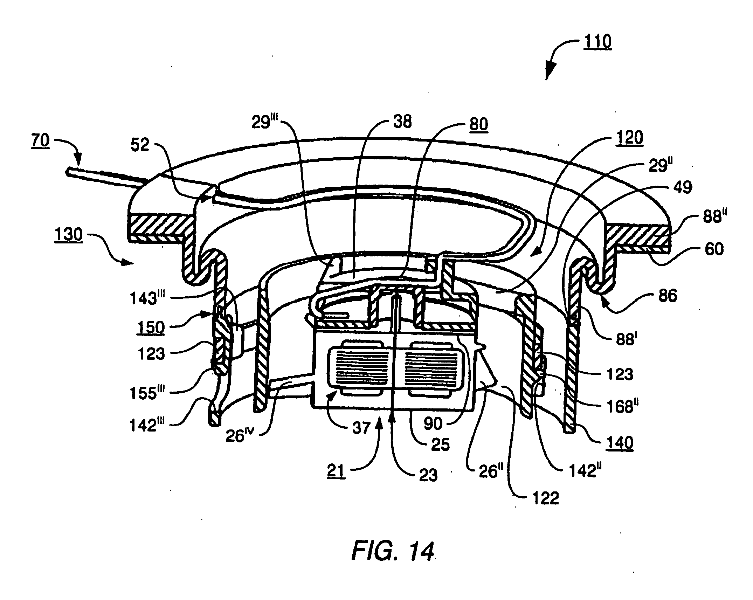

Fig. 11 zeigt eine zweite Ausführungsform einer Lüftereinheit 110 mit einem Axiallüfter 120 und einer vibrations- und geräuschdämpfenden Vorrichtung 130 in einer Rückansicht. Der Axiallüfter 120 entspricht im Wesentlichen dem Axiallüfter 20 der ersten Ausführungsform mit dem Motor 21, der in Fig. 14 gezeigt ist, hat jedoch ein modifiziertes Luftführungsrohr 122. Dieses ist etwa hohl zylindrisch, kann einheitlich aus Kunststoff oder Metall oder einer beliebigen Mischform hiervon ausgebildet werden und ist, wie bei Fig. 13 beschrieben, mit einem Aufhängeglied 123 aus einem elastomeren Werkstoff verbunden.

Der Axiallüfter 120 von Fig. 11 ist in der vibrations- und geräuschdämpfenden Vorrichtung 130 angeordnet, zu welcher ein erster Ring bzw. Trägerring 140 zur elastischen Aufhängung des Lüfters 120, ein mit diesem verbundener rohrartiger Fortsatz 150 zur Schwingungsdämpfung, sowie der Stützring 60 gehören. Der Trägerring 140, der rohrartige Fortsatz 150 und der Stützring 60 sind wiederum bevorzugt als bauliche Einheit in Mehrkomponententechnik ausgebildet, insbesondere in 2K-Technik, wobei der Trägerring 140 und der Stützring 60 aus einem harten Kunststoff und der rohrartige Fortsatz 150 aus einem weichen Werkstoff hergestellt sind. Der Trägerring 140, der rohrartige Fortsatz 150 und der Stützring 60 können wie oben bei Fig. 1 beschrieben miteinander verbunden werden.

An dem Fortsatz 150 ist das Federelement 86 (Fig. 13) zur Schwingungsdämpfung vorgesehen. Alternativ kann der Fortsatz 150 mit dem bei Fig. 10 beschriebenen Federelement 86', oder ähnlichen Federelementen mit einem vorgegebenen Schwingverhalten, ausgebildet sein.

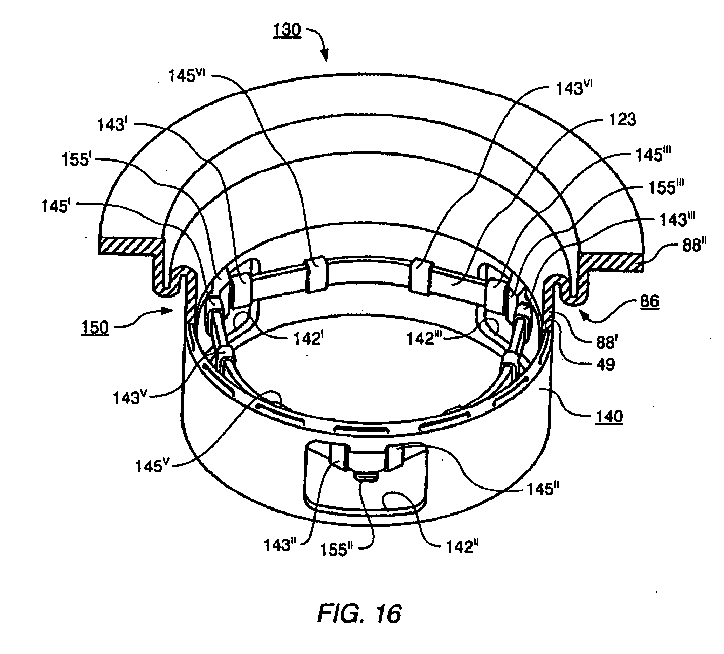

Am Trägerring 140 sind zum Einhängen des Aufhängeglieds 123 mehrere Einhängeglieder 155' bis 155''' (nachfolgend auch als die Einhängeglieder 155 bezeichnet) aus einem harten Kunststoff vorgesehen, die in hierfür vorgesehenen seitlichen Ausnehmungen 142' bis 142''' (nachfolgend auch als die Ausnehmungen 142 bezeichnet) angeordnet sind. Das Aufhängeglied 123 ist als ringförmiges Trägerband ausgebildet, wie bei den Fig. 13 und 16 beschrieben.

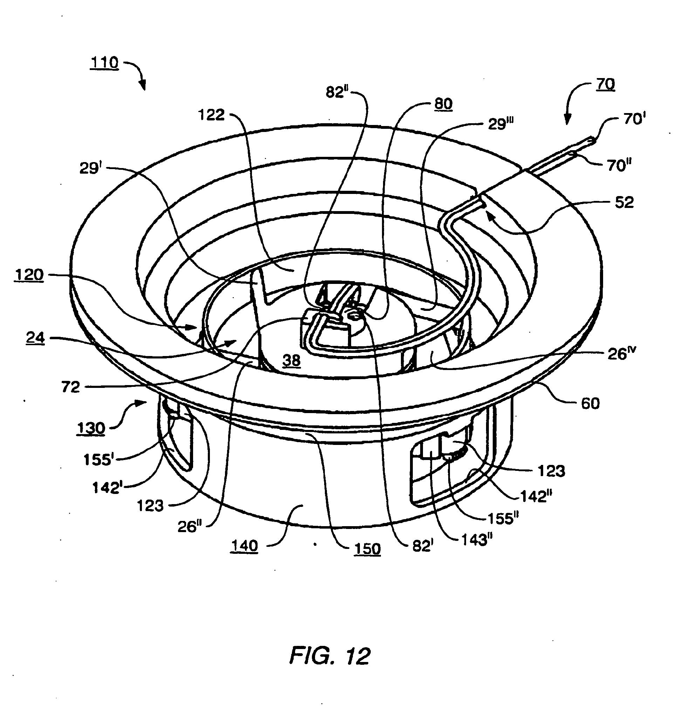

Fig. 12 zeigt eine Vorderansicht der Lüftereinheit 110 von Fig. 11, in der die Montage des Motors 21 an der am Luftführungsrohr 122 befestigten Flanschplatte 38 verdeutlicht ist, die über die Haltestege 29' bis 29^{III} mit dem Luftführungsrohr 122 verbunden ist. In der Platte 38 befindet sich das Lagerelement 80, welches mit den Befestigungselementen 82 versehen ist. Fig. 12 verdeutlicht eine beispielhafte Kabelführung der Anschlussleitung 70 über die Platte 38, die Halterung 72 und die Öffnung 52.

Fig. 13 zeigt eine Ausführungsform der Erfindung, bei der die Einhängeglieder 155 aus einem harten Kunststoff und als Bestandteile des rohrartigen Fortsatzes 150 ausgebildet sind. Diese sind in den Ausnehmungen 142 angeordnet, von denen in Fig. 13 nur die Ausnehmungen 142' und 142''' mit den Einhängegliedern 155' bzw. 155"' sichtbar sind.

In Fig. 13 sind die Einhängeglieder 155 als Haken dargestellt, an denen das Aufhängeglied 123 nach der Montage der Lüftereinheit 110 aufgehängt ist. Diese Haken sind bevorzugt als Bestandteile des Trägerrings 140 derart ausgebildet, dass das Aufhängeglied 123 zumindest teilweise in die Ausnehmungen 142 eingreift.

Das Aufhängeglied 123 ist ebenfalls in Haltehaken 168', 168", 168''', 169', 169", 169''' eingehängt. Diese sind am Außenumfang des Trägerrings 140 vorgesehen und z.B. als Bestandteile des Trägerrings 140 aus einem harten Kunststoff hergestellt. Um ein Verrutschen des Aufhängeglieds 123 im Betrieb der Lüftereinheit 110 zu verhindern, sind an diesem Versteifungsglieder 143 und 145 vorgesehen, von denen in Fig. 13 nur die Versteifungsglieder 143", 143"', 143^{V}, 143^{VI}, 145', 145", 145"', 145^{V} und 145^{VI} sichtbar sind. Diese sind jeweils im Bereich der Einhängeglieder 155 und der Haltehaken 168', 168", 168"', 169', 169", 169''' derart angeordnet, dass das Aufhängeglied 123 rutschfest darin gehalten wird.

Fig. 14 zeigt eine Schnittansicht der Lüftereinheit 110, bei welcher der Axiallüfter 120 in der vibrations- und geräuschdämpfenden Vorrichtung 130 montiert ist. Darüber hinaus zeigt Fig. 14 den Motor 21 mit der Statoranordnung 37.

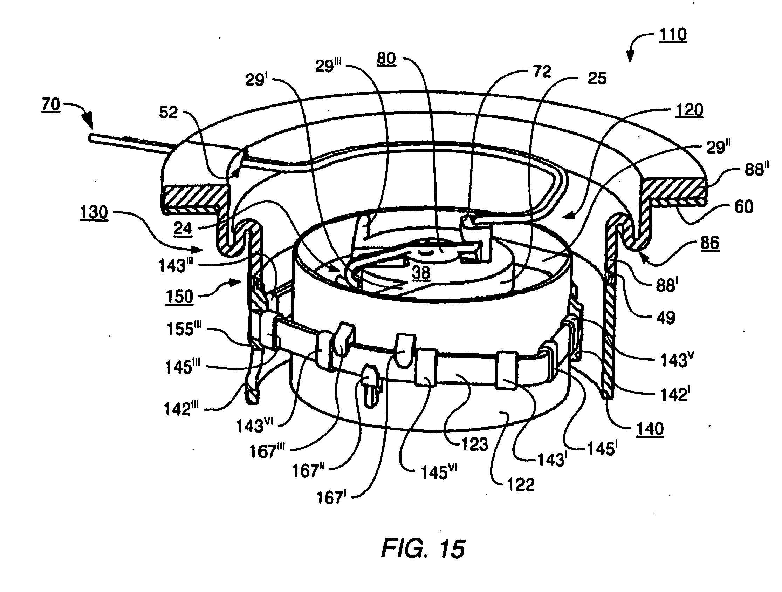

Fig. 15 zeigt eine teilweise geschnittene, perspektivische Ansicht der Lüftereinheit 110. Fig. 15 verdeutlicht einerseits die am rohrartigen Fortsatz 150 vorgesehene, ringförmige Schulter 49, gegen die der Trägerring 140 anliegt. Andererseits verdeutlicht Fig. 15 die Aufhängung des Luftführungsrohrs 122 in der vibrations- und geräuschdämpfenden Vorrichtung 130 durch das in den Einhängegliedern 155 eingehängte Aufhängeglied 123, wobei nur das Einhängeglied 155''' sichtbar ist.

Diese Aufhängung wird in Fig. 16 weiter verdeutlicht, in der auf eine Abbildung des Lüfters 120 verzichtet wurde. Darüber hinaus ist aus Fig. 16 ersichtlich, dass der rohrartige Fortsatz 150 gegen den Trägerring 140 anliegt bzw. auf diesem aufsitzt, ohne diesen zu ummanteln. Jedoch kann auch bei dieser Ausführungsform der rohrartige Fortsatz 150 derart ausgebildet sein, dass er den Trägerring 140 zumindest teilweise ummantelt.

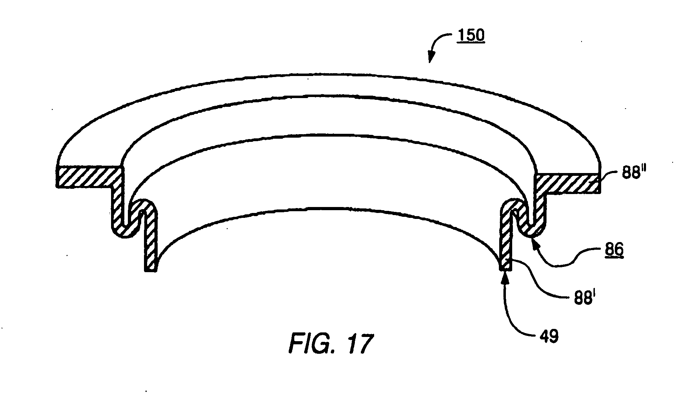

Fig. 17 zeigt eine Schnittansicht des rohrartigen Fortsatzes 150, welche das als gebogene, in etwa S-förmige Schwingungsmembran ausgebildete Federelement 86 verdeutlicht. Dieses kann alternativ wie das oben bei Fig. 10 beschriebene, modifizierte Federelement 86' mit den Umfangswülsten 86" und 86''' ausgebildet sein oder auf andere, unterschiedliche Art und Weise, je nachdem, welches Schwingverhalten erforderlich ist.

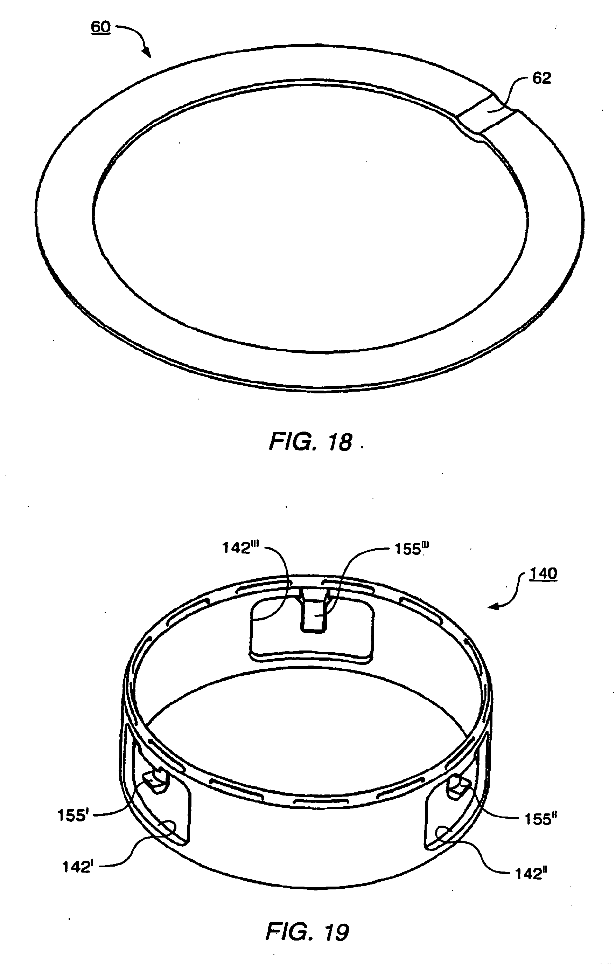

Fig. 18 zeigt eine perspektivische Ansicht des Stützrings 60, welcher eine Ausbuchtung 62 zur Führung der Anschlussleitung 70 von Fig. 11 aufweist, und Fig. 19 zeigt eine perspektivische Ansicht des Trägerrings 140, welche die in diesem vorgesehenen Ausnehmungen 142' bis 142''' mit den darin vorgesehenen, als Haken ausgebildeten Einhängegliedern 155' bis 155"' verdeutlicht.

Naturgemäß sind im Rahmen der vorliegenden Erfindung vielfache Abwandlungen und Modifikationen möglich.

Insbesondere kann in einer Lüftereinheit nach Anspruch 14 das Einhängeglied 155 als integraler Bestandteil des ersten Rings 140 ausgebildet sein. In einer Lüftereinheit nach Anspruch 13 oder 14 oder nach dem vorhergehenden Satz kann das mindestens eine Aufhängeglied 123 als ringförmiges Trägerband ausgebildet sein, welches an einer Mehrzahl von an dem Luftführungsrohr 122 vorgesehenen Halterungen (168', 168", 168"', 169', 169", 169''') befestigt ist. Bei einer Lüftereinheit nach Anspruch 15 kann zumindest ein Teil eines Aufhängeglieds 23 in eine seitliche Ausnehmung (42) eingreifen, insbesondere kann ein Aufhängeglied eine Aussparung (28) aufweisen, welche auf dem Auflageelement 55 aufliegt, insbesondere kann das Auflageelement 55 als Bestandteil des rohrartigen Fortsatzes 50 ausgebildet sein.

Man kann die Erfindung alternativ auch wie folgt beschreiben:
Vorrichtung zur vibrationsdämpfenden Aufhängung eines Bauteils, welche Vorrichtung ein aus einem harten Kunststoff gebildetes Trägerelement 40; 140 aufweist, welches mindestens einen aus einem weichen Kunststoff gebildeten Fortsatz 50; 150 zur vibrationsdämpfenden Verbindung des Bauteils mit einem Trägerteil 15 aufweist
wobei insbesondere das Bauteil eine Lüftereinheit 10; 110 mit einem Axiallüfter 20; 120 ist, welchem ein Luftführungsrohr 22; 122 zugeordnet ist, durch welches der Lüfter 20; 120 im Betrieb Luft transportiert,
wobei insbesondere das Luftführungsrohr 22; 122 mit mindestens einem Aufhängeglied 23; 123 aus einem elastomeren Werkstoff verbunden ist, welches Aufhängeglied in dem Trägerelement 40; 140 elastisch aufgehängt ist.

## Patentansprüche

1. Lüftereinheit, mit einem Axiallüfter (20; 120), welcher Axiallüfter ein luftführungsrohr (22; 122) aufweist, das im Folgenden als internes Luftführungsrohr bezeichnet wird und durch welches im Betrieb Luft transportiert wird, welches interne Luftführungsrohr (22; 122) mit mindestens einem Aufhängeglied (23; 123) aus einem elastomeren Werkstoff versehen ist, **dadurch gekennzeichnet, dass** die lüftereinheit ein externes Rohr (50; 150) aus einem weichen Kunststoff aufweist, welches mit einem aus einem formstabilen Kunststoff gebildeten ersten Ring (40; 140) verbunden ist, innerhalb dessen das interne Luftführungsrohr (22; 122) mittels des mindestens einen Aufhängegliedes (23; 123) befestigt ist und der mindestens eine seitliche Ausnehmung (42; 142) aufweist, an welcher ein Einhängeglied (55; 155) zum Einhängen des mindestens einen Aufhängeglieds (23; 123) vorgesehen ist.

2. Lüftereinheit nach Anspruch 1, bei welcher das mindestens eine Einhängeglied (155) hakenförmig ausgebildet ist,
und das mindestens eine Aufhängeglied (123) an diesem Einhängeglied (155) aufgehängt ist.

3. Lüftereinheit nach Anspruch 2, bei welcher das mindestens eine Einhängeglied (55) als Auflageelement ausgebildet ist,
und das mindestens eine Aufhängeglied (23) zumindest teilweise auf dem Auflageelement (55) aufliegt.

4. Lüftereinheit nach einem der vorhergehenden Ansprüche, bei welcher das externe Rohr (50; 150) nach Art eines Faltenbalgs ausgebildet ist.

5. Lüftereinheit nach einem der vorhergehenden Ansprüche, bei welcher das externe Rohr (50; 150) einen aus einem harten Kunststoff ausgebildeten zweiten Ring (60) zur vibrationsdämpfenden Verbindung dieses Rohres (50; 150) mit einem Trägerteil (15) aufweist.

6. Lüftereinheit nach Anspruch 5, bei welcher der zweite Ring (60) mit dem dem Trägerteil (15) zugewandten Ende des externen Rohres (50; 150) verbunden ist.

7. Lüftereinheit nach Anspruch 5 oder 6, bei welcher der erste Ring (40; 140), das externe Rohr (50; 150), und der zweite Ring (60) in Mehrkomponententechnik als bauliche Einheit ausgebildet sind.

8. Lüftereinheit nach einem der Ansprüche 5 bis 7, bei welcher das externe Rohr (50; 150) zwischen dem ersten Ring (40; 140) und dem zweiten Ring (60) ein Federelement (86, 86') mit einem vorgegebenen Schwingverhalten aufweist, um eine relative Bewegung zwischen dem ersten Ring (40; 140) und dem zweiten Ring (60) zu ermöglichen.

9. Lüftereinheit nach Anspruch 8, bei welcher das Federelement (86) nach Art einer Membran ausgebildet ist.

10. Lüftereinheit nach Anspruch 9, bei welcher das Federelement (86') als Umfangswulst (86", 86''') ausgebildet ist (Fig. 10).

11. Lüftereinheit nach einem der Ansprüche 5 bis 10, bei welcher das externe Rohr (50; 150) durch Spritzguss mit dem ersten Ring (40; 140) und/oder dem zweiten Ring (60) verbunden ist.

12. Lüftereinheit nach einem der Ansprüche 5 bis 11, bei welcher das externe Rohr (50; 150) durch eine Klemmverbindung mit dem ersten Ring (40; 140) und/oder dem zweiten Ring (60) verbunden ist (Fig. 13).

13. Lüftereinheit nach einem der Ansprüche 5 bis 12, bei welcher das externe Rohr (50; 150) durch eine Klebeverbindung mit dem ersten Ring (40; 140) und/oder dem zweiten Ring (60) verbunden ist.

14. Lüftereinheit nach einem der Ansprüche 5 bis 13, bei welcher das externe Rohr (50; 150) durch Kunststoffschweißen mit dem ersten Ring (40; 140) und/oder dem zweiten Ring (60) verbunden ist.

## Claims

1. Fan unit having an axial fan (20; 120), which axial fan has an air-guiding tube (22; 122) which will be referred to below as an "internal air-guiding tube" and through which air is transported during operation, which internal air-guiding tube (22; 122) is provided with at least one suspension member (23; 123) made of an elastomeric material, **characterised in that** the fan unit has an external tube (50; 150) which is made of a soft plastic and is connected to a first ring (40; 140) which is formed from a dimensionally stable plastic and inside which the internal air-guiding tube (22; 122) is fastened by means of the at least one suspension member (23; 123) and which has at least one lateral clearance (42; 142) at which a hooking-in member (55; 155) is provided for hooking in the at least one suspension member (23; 123).

2. Fan unit according to claim 1, in which the at least one hooking-in member (155) is of hook-shaped construction,
and the at least one suspension member (123) is suspended on the said hooking-in member (155).

3. Fan unit according to claim 2, in which the at least one hooking-in member (55) is constructed as a supporting element,
and the at least one suspension member (23) rests, at least partly, on the supporting element (55).

4. Fan unit according to one of the preceding claims, in which the external tube (50; 150) is constructed in the manner of a bellows.

5. Fan unit according to one of the preceding claims, in which the external tube (50; 150) has a second ring (60) constructed from a hard plastic for the vibration-absorbing connection of the said tube (50; 150) to a carrier part (15).

6. Fan unit according to claim 5, in which the second ring (60) is connected to that end of the external tube (50; 150) which faces towards the carrier part (15).

7. Fan unit according to claim 5 or 6, in which the first ring (40; 140), the external tube (50; 150) and the second ring (60) are constructed as a structural unit using multi-component technology.

8. Fan unit according to one of claims 5 to 7, in which the external tube (50; 150) has, between the first ring (40; 140) and the second ring (60), a spring element (86, 86') with a predetermined oscillation behaviour, in order to permit a relative movement between the first ring (40; 140) and the second ring (60).

9. Fan unit according to claim 8, in which the spring element (86) is constructed in the manner of a diaphragm.

10. Fan unit according to claim 9, in which the spring element (86') is constructed as a peripheral bead (86", 86") (Fig. 10).

11. Fan unit according to one of claims 5 to 10, in which the external tube (50; 150) is connected to the first ring (40; 140) and/or to the second ring (60) by injection moulding.

12. Fan unit according to one of claims 5 to 11, in which the external tube (50; 150) is connected to the first ring (40; 140) and/or to the second ring (60) by a clamping connection (Fig. 13).

13. Fan unit according to one of claims 5 to 12, in which the external tube (50; 150) is connected to the first ring (40; 140) and/or to the second ring (60) by an adhesive connection.

14. Fan unit according to one of claims 5 to 13, in which the external tube (50; 150) is connected to the first ring (40; 140) and/or to the second ring (60) by plastic welding.

## Revendications

1. Unité de ventilation équipée d'un ventilateur axial (20 ; 120), lequel ventilateur axial comporte un tube (22 ; 122) de guidage d'air qui est qualifié de tube interne de guidage d'air, ci-après, et par l'intermédiaire duquel de l'air est acheminé en service, lequel tube interne (22 ; 122) de guidage d'air est muni d'au moins un organe de suspension (23 ; 123) en un matériau élastomère, **caractérisée par le fait que** ladite unité de ventilation est dotée d'un tube externe (50 ; 150) en une matière plastique tendre ou molle, relié à une première bague (40 ; 140) constituée d'une matière plastique à stabilité de forme, à l'intérieur de laquelle le tube interne (22 ; 122) de guidage d'air est fixé au moyen d'au moins un organe de suspension (23 ; 123), et qui est pourvue d'au moins un évidement latéral (42 ; 142) au niveau duquel un organe d'accrochage (55 ; 155) est prévu pour accrocher ledit au moins un organe de suspension (23 ; 123).

2. Unité de ventilation selon la revendication 1, dans laquelle l'organe d'accrochage (155), prévu au minimum, est réalisé en forme de crochet,
et l'organe de suspension (123), prévu au minimum, est suspendu à cet organe d'accrochage (155).

3. Unité de ventilation selon la revendication 2, dans laquelle l'organe d'accrochage (55), prévu au minimum, est réalisé sous la forme d'un élément d'appui,
et l'organe de suspension (23), prévu au minimum, repose au moins en partie sur ledit élément d'appui (55).

4. Unité de ventilation selon l'une des revendications précédentes, dans laquelle le tube externe (50 ; 150) est réalisé à la manière d'un soufflet.

5. Unité de ventilation selon l'une des revendications précédentes, dans laquelle le tube externe (50 ; 150) comporte une seconde bague (60) constituée d'une matière plastique dure, en vue de relier ce tube (50 ; 150) à une partie de support (15) avec effet d'amortissement vibratoire.

6. Unité de ventilation selon la revendication 5, dans laquelle la seconde bague (60) est reliée à l'extrémité du tube externe (50 ; 150) qui est tournée vers la partie de support (15).

7. Unité de ventilation selon la revendication 5 ou 6, dans laquelle la première bague (40 ; 140), le tube externe (50 ; 150) et la seconde bague (60) sont réalisés sous la forme d'un ensemble structurel unitaire par application d'une technique à composants multiples.

8. Unité de ventilation selon l'une des revendications 5 à 7, dans laquelle le tube externe (50 ; 150) présente, entre la première bague (40 ; 140) et la seconde bague (60), un élément élastique (86, 86') à comportement oscillatoire préétabli, en vue d'autoriser un mouvement relatif entre ladite première bague (40 ; 140) et ladite seconde bague (60).

9. Unité de ventilation selon la revendication 8, dans laquelle l'élément élastique (86) est de réalisation du type membrane.

10. Unité de ventilation selon la revendication 9, dans laquelle l'élément élastique (86') est réalisé sous la forme d'un bourrelet périphérique (86", 86"') (figure 10).

11. Unité de ventilation selon l'une des revendications 5 à 10, dans laquelle le tube externe (50 ; 150) est relié à la première bague (40 ; 140) et/ou à la seconde bague (60) par coulée injectée.

12. Unité de ventilation selon l'une des revendications 5 à 11, dans laquelle le tube externe (50 ; 150) est relié à la première bague (40 ; 140) et/ou à la seconde bague (60) par instauration d'une liaison par coincement (figure 13).

13. Unité de ventilation selon l'une des revendications 5 à 12, dans laquelle le tube externe (50 ; 150) est relié à la première bague (40 ; 140) et/ou à la seconde bague (60) par instauration d'une liaison par collage.

14. Unité de ventilation selon l'une des revendications 5 à 13, dans laquelle le tube externe (50 ; 150) est relié à la première bague (40 ; 140) et/ou à la seconde bague (60) par soudage de matières plastiques.
